# EUROPÄISCHE PATENTSCHRIFT

(11) **EP 4 039 080 B1**
(45) Veröffentlichungstag und Bekanntmachung des Hinweises auf die Patenterteilung: **25.12.2024**
(21) Anmeldenummer: 22154572.6
(22) Anmeldetag: 01.02.2022
(51) Int. Cl.: A01F 15/10, B65G 45/12, B08B 1/00

(54) **BALLENPRESSE**
BALING PRESS
PRESSE A BALLES

(30) Priorität: 03.02.2021 DE 102021102476
(43) Veröffentlichungstag der Anmeldung: 10.08.2022
(73) Patentinhaber: Maschinenfabrik Bernard Krone GmbH & Co. KG, 48480 Spelle (DE)
(72) Erfinder: JÜRLING, DENNIS, Beesten (DE)

(56) Entgegenhaltungen:
- EP-A1- 3 120 689
- DE-A1- 3 825 190
- DE-T2- 69 404 235
- DE-U1- 29 515 629
- US-A- 4 189 875
- US-A1- 2016 340 128

## Beschreibung

Die vorliegende Erfindung betrifft eine Ballenpresse für landwirtschaftliches Erntegut nach dem Oberbegriff von Anspruch 1.

Erntemaschinen werden in der Landwirtschaft eingesetzt, um Erntegut wie z.B. Heu oder Stroh aufzunehmen und ggf. weiterzuverarbeiten. Die Weiterverarbeitung kann u.a. ein Zerkleinern, ein Pressen und/oder ein Verpacken bzw. Umwickeln des Ernteguts beinhalten. Im Falle einer Ballenpresse wird das Erntegut zu Ballen (z.B. Rundballen oder Quaderballen) verpresst, die anschließend mit einem Bindematerial umwickelt werden können, entweder innerhalb der Ballenpresse oder in einer hiervon separaten Ballenwickelgerät. Als Bindematerial können Schnüre, Netze oder (z.B. im Falle von Gras) Folien verwendet werden. Bei einer Rundballenpresse wird das Erntegut normalerweise durch eine Pick-up vom Boden aufgenommen und weiter an einen Förderrotor übergeben, der das Erntegut über eine Förderkanal zur Ballenbildungskammer bzw. Presskammer fördert, wo das eigentliche Verpressen erfolgt. Dort wirken mehrere Presselemente auf das Erntegut ein, die auch als Förderelemente wirken und eine umlaufende Bewegung des Ernteguts erzeugen. Als Presselemente werden vor allem Walzen, Gurte oder Ketten verwendet. Es sind Festkammerpressen bekannt, bei denen die Press- bzw. Förderelemente entsprechend einer vorgesehenen Endgröße des Ballens angeordnet sind, wobei das eigentliche Verpressen hauptsächlich erfolgt, wenn die Kammer (nahezu) vollständig gefüllt ist. Außerdem sind Pressen mit variabler Kammer bekannt, bei denen die effektive Größe der Kammer an die zunehmende Menge von Erntegut angepasst wird, wobei typischerweise ein Presselement als Riemen ausgebildet ist, der unter Spannung gehalten wird und einen überwiegenden Teil der Presskammer definiert. Sowohl Erntegut als auch mit diesem aufgenommene Verunreinigungen können an den Förderelementen anhaften, was u.U. die Funktion der Erntemaschine beeinträchtigen kann. Auch kann ein Bindematerial, welches durch ein Förderelement zum Ballen zugeführt werden soll, an der Oberfläche des Förderelements anhaften. Gemäß einem Typ der Rundballenpresse wird das Bindematerial (z.B. ein Netz) über eine Presswalze geführt, die auch zum Verpressen des Rundballens beiträgt und an diesem anliegt. Bei ordnungsgemäßem Ablauf wird das Bindematerial von der Presswalze mitgenommen, zwischen Presswalze und Rundballen geführt und haftet dann am Rundballen an. Es kann allerdings auch dazu kommen, dass das Bindematerial statt am Rundballen weiter an der Presswalze haftet. In diesem Fall würde es sich um die Presswalze wickeln, was das Einwickeln des Rundballens verhindern würde und zum Stillstand oder zur Beschädigung der Rundballenpresse führen könnte.

Um dies zu verhindern, ist es im Stand der Technik bekannt, einen Abstreifer benachbart zur Presswalze anzuordnen. Dieser ist typischerweise als leistenförmiges Blechteil ausgebildet und wird auch als Abstreiferblech oder Kratzleiste bezeichnet. Er ist mit einer Kante unmittelbar benachbart zur Oberfläche der Presswalze angeordnet. Durch die Drehung der Presswalze wird an deren Oberfläche anhaftendes Material, also Erntegut, Verunreinigungen und/oder Bindematerial, abgestreift. Der Abstreifer kann dabei auch als Leitelement wirken, welches das abgestreifte Bindematerial zum Rundballen hin führt. Für die optimale Funktion des Abstreifers sind seine Position und insbesondere sein Abstand zur Oberfläche der Walze entscheidend. Um diese einstellen zu können, kann der Abstreifer mit einem stationären Abstreiferträger durch mehrere Schrauben verbunden sein, die durch Langlöcher im Abstreifer geführt und in den Abstreiferträger eingeschraubt sind. Z.T. sind zusätzlich Gewindestifte in Durchgangsöffnungen des Abstreifers eingeschraubt, die den Abstreifer gegen den Abstreiferträger verspannen können. Dennoch besteht die Gefahr, dass sich der Abstreifer setzt, sich also gegenüber der eingestellten Position verstellt. Dies kann sogar beim Festziehen der Schrauben geschehen oder später beim Betrieb der Rundballenpresse. Nach längerem Betrieb kann sich der Abstand zwischen Walze und Abstreifer auch durch Verschleiß am Abstreifer ändern. Zudem besteht das Problem einer Verunreinigung der Gewindestifte, die z.B. ein Innensechskantprofil aufweisen können, welches vor der Benutzung zunächst mühsam gereinigt werden muss.

Die Druckschrift EP 3 120 689 B1 offenbart eine Abstreifereinrichtung zur Verminderung von Anhaftungen an einer mit einem Ballen zusammenwirkenden Walze einer landwirtschaftlichen Rundballenpresse, mit einer Kratzleiste, einem Kratzleistenträger und mit wenigstens einem Befestigungsmittel zur Verbindung der Kratzleiste mit dem Kratzleistenträger. Die Kratzleiste weist ein drehbares Stellmittel auf, mit Mitteln zur Verstellung der Kratzleiste entlang einer exzentrischen Führungsbahn, die sich vorzugsweise schneckenförmig oder zumindest annähernd kreisevolvent von einem zumindest nahe einem Mittelpunkt des Stellmittels gelegenen Bereich in Richtung eines Randbereichs des Stellmittels erstreckt. An dem Kratzleistenträger ist wenigstens ein stationäres Führungsmittel angeordnet, welches in einer Führungsnut der Kratzleiste aufgenommen ist, so dass sich die Kratzleiste gegenüber dem stationären Führungsmittel verschieben lässt, wobei durch Verdrehen des wenigstens einen drehbaren Stellmittels die Kratzleiste gegenüber dem Kratzleistenträger linear verstellt wird.

Weitere Abstreifereinrichtungen sind aus US 4 189 875 A, DE 694 04 235 T2, US 2016/340128 A1, DE 295 15 629 U1 und DE 38 25 190 A1 bekannt.

Aufgabe der Erfindung ist es, zuverlässige Mittel zur Einstellung einer Position eines Abstreifers einer Ballenpresse vorzuschlagen.

Die Aufgabe wird gelöst mit einer Ballenpresse für landwirtschaftliches Erntegut, mit den Merkmalen des unabhängigen Patentanspruchs 1. Vorteilhafte Ausführungsformen sind den abhängigen Ansprüchen entnehmbar.

Dafür wird eine Erntemaschine für landwirtschaftliches Erntegut geschaffen, aufweisend ein bewegliches Förderelement sowie eine Abstreifvorrichtung mit einem Abstreiferträger sowie einem Abstreifer, wobei eine Oberfläche des Förderelements benachbart zum Abstreifer an diesem vorbeibewegbar ist, um anhaftendes Material von der Oberfläche abzustreifen, und wobei eine Position des Abstreifers relativ zum Abstreiferträger einstellbar ist.

Bei der Erntemaschine kann es sich insbesondere um eine Ballenpresse wie eine Rundballenpresse oder Quaderballenpresse handeln. Der Begriff "Ballenpresse" schließt hierbei ausdrücklich auch Maschinen ein, die zusätzlich zu einem Pressen des Ernteguts zu Ballen auch ein Binden bzw. Verpacken der Ballen durchführen. Bei dem landwirtschaftlichen Erntegut kann es sich insbesondere um Halmgut wie Gras, Stroh oder Heu handeln. Die Erntemaschine weist ein bewegliches Förderelement auf, d.h. das Förderelement ist innerhalb der Erntemaschine beweglich bzw. beweglich gelagert. Die Beweglichkeit kann insbesondere relativ zu einem Rahmen oder einem Gehäuse der Erntemaschine gegeben sein. Das Förderelement kann insbesondere drehbar gelagert sein und als Walze ausgebildet sein. Es könnte sich bei dem Förderelement allerdings auch um einen Riemen oder um eine Kette handeln. Das Förderelement kann zum Fördern von Erntegut dienen. Alternativ oder zusätzlich kann es z.B. zum Fördern eines Bindematerials bzw. Verpackungsmittels dienen, mit welchem die Ballen gebunden oder verpackt werden, also z.B. wenigstens einer Schnur, eines Netzes oder einer Folie. Abgesehen von der Förderfunktion kann das Förderelement auch als Presselement dienen, also dazu ausgebildet sein, das Erntegut zu pressen bzw. zu komprimieren.

Des Weiteren weist die Erntemaschine eine Abstreifvorrichtung auf, mit einem Abstreiferträger sowie einem Abstreifer. Die Abstreifvorrichtung ist normalerweise während des Betriebs der Erntemaschine durchgehend stationär, d.h. sie wird positionsfest gegenüber dem Rahmen oder dem Gehäuse der Erntemaschine gehalten. Die Abstreifvorrichtung ist so positioniert, dass eine Oberfläche des Förderelements benachbart zum Abstreifer an diesem vorbeigeführt werden kann, um Material abzustreifen, das der Oberfläche anhaftet. Die Oberfläche des Förderelements kann insbesondere die Mantelfläche einer Walze sein. Es kann sich aber auch bspw. um die Oberfläche eines umlaufenden Riemens handeln. Unter Umständen kann die Oberfläche ein Profil aufweisen. Beim Betrieb der Erntemaschine bewegt sich das Förderelement so, dass die Oberfläche am Abstreifer vorbeibewegt wird. Da sich der Abstreifer hierbei benachbart zur Oberfläche befindet (bspw. in einem geringen Abstand von weniger als 1 mm), wird Material, das der Oberfläche anhaftet, abgestreift, also von der Oberfläche abgelöst. Bei dem Material kann es sich um Erntegut handeln, um Verunreinigungen wie Erde oder Steine, mit denen das Erntegut gemischt ist, aber auch um ein Bindematerial, das zum Binden oder Verpacken eines Ballens verwendet wird. Insbesondere kann sich das Problem ergeben, dass ein solches Bindematerial, bspw. eine Folie, eine Schnur oder ein Netz, an einer rotierenden Walze anhaftet, so dass die Gefahr besteht, dass es sich um diese Walze wickelt, statt bestimmungsgemäß um den Ballen gewickelt werden. Die Wahrscheinlichkeit hierfür erhöht sich bei einer höheren Pressdichte des Ballens, die zunehmend gewünscht wird. Dieser Gefahr kann entgegengewirkt werden, indem durch den Abstreifer einerseits das Bindematerial selbst abgestreift wird, andererseits aber auch dadurch, dass Erntegut oder Verunreinigungen abgestreift werden, die eine ungewollte Anhaftung des Bindematerials am Förderelement begünstigen würden.

Der Abstreifer ist normalerweise plattenartig ausgebildet und kann bspw. aus Stahlblech bestehen. Er kann zumindest in einigen Ausgestaltungen auch als Abstreiferelement, Abstreiferblech oder Kratzleiste bezeichnet werden. Er ist der Teil der Abstreifvorrichtung, der für das eigentliche Abstreifen von Material verantwortlich ist und stellt somit ein Verschleißteil dar. Dementsprechend ist zum einen nach einer gewissen Zeit ein Nachstellen des Abstreifers notwendig, um einen als optimal erachteten Abstand zur Oberfläche des Förderelements wiederherzustellen, zum anderen kann nach längerem Gebrauch auch ein Austausch des Abstreifers nötig werden. Der Abstreifer wird direkt oder indirekt vom Abstreiferträger getragen, der seinerseits in der Regel für die gesamte Lebensdauer der Erntemaschine vorgesehen ist und in einer festen, unveränderbaren Position zur Oberfläche des Förderelements montiert sein kann. Demgegenüber ist eine Position des Abstreifers relativ zum Abstreiferträger einstellbar. Es versteht sich, dass eine Einstellung der Position des Abstreifers relativ zum Abstreiferträger auch eine Einstellung der Position des Abstreifers relativ zur Oberfläche des Förderelements bedeutet. Durch die Einstellung kann zum einen bei erstmaliger Inbetriebnahme des Abstreifers die Position optimiert werden, insbesondere der Abstand zur Oberfläche, zum anderen kann bei einer Abnutzung des Abstreifers die Position nachjustiert werden.

Erfindungsgemäß zeichnet sich die Ballenpresse dadurch aus, dass der Abstreifer mit dem Abstreiferträger durch wenigstens eine Verstellanordnung verbunden ist, die ein gegenüber dem Abstreiferträger um eine Verstellrichtung drehbares erstes Stellelement aufweist sowie ein mit diesem ein Schraubengetriebe bildendes, gegenüber dem Abstreiferträger in Verstellrichtung verschiebbares zweites Stellelement, welches zur Kraftübertragung auf den Abstreifer eingerichtet ist. Die jeweilige Verstellungsanordnung weist somit wenigstens zwei Elemente auf. Das erste Stellelement, welches auch als Drehelement bezeichnet werden könnte, ist gegenüber dem Abstreiferträger um die Verstellrichtung drehbar. D.h. die Verstellrichtung entspricht der Drehachse, so dass man auch von einer Verstellachse sprechen könnte. Das erste Stellelement ist derart direkt oder indirekt am Abstreiferträger gelagert, dass es um die Verstellrichtung bzw. Verstellachse drehbar ist. Es wirkt mit dem zweiten Stellelement zusammen, welches auch als Schubelement oder Schieberelement bezeichnet werden könnte und das gegenüber dem Abstreiferträger in Verstellrichtung verschiebbar ist. Dabei bilden die beiden Stellelemente ein Schraubengetriebe, durch welches die Drehbewegung des ersten Stellelements in eine Verschiebung des zweiten Stellelements umgesetzt wird. Man kann auch von einem Spindelgetriebe sprechen, bei welchem ein Stellelement die Spindel aufweist und das andere Stellelement die Spindelmutter aufweist. Normalerweise weist das erste Stellelement ein erstes Gewinde auf, das direkt mit einem zweiten Gewinde des zweiten Stellelement zusammenwirkt. Es sind allerdings auch andere Ausgestaltungen möglich, bspw. nach Art eines Kugelgewindetriebes, wobei die Kraftübertragung zwischen den Stellelementen überwiegend durch eine Mehrzahl von zwischengeordneten Kugeln erfolgt.

Das zweite Stellelement ist zur Kraftübertragung auf den Abstreifer eingerichtet, d.h. bei einer Verschiebung des zweiten Stellelements kommt es zu einer Kraftübertragung auf den Abstreifer, so dass dieser der Bewegung des zweiten Stellelement folgend verstellt wird. Die Kraftübertragung kann indirekt oder direkt erfolgen. In letzterem Fall kann zwischen dem zweiten Stellelement und dem Abstreifer einen Kraftschluss, ein Stoffschluss und/oder ein Formschluss gegeben sein. Es wäre auch denkbar, dass das zweite Stellelement einstückig mit dem Abstreifer ausgebildet ist. Insgesamt bewirkt die Drehung des ersten Stellelements eine Verstellung des Abstreifers gegenüber dem Abstreiferträger. Das Schraubengetriebe ermöglicht dabei eine präzise Justierung der Position des Abstreifers. Dennoch lässt es sich vergleichsweise einfach und robust realisieren.

Gemäß einer bevorzugten Ausgestaltung weist das erste Stellelement ein Außengewinde auf und das zweite Stellelement weist ein hiermit zusammenwirkendes Innengewinde auf. Anders ausgedrückt, das erste Stellelement weist in diesem Fall die Spindel auf und das zweite Stellelement weist die Spindelmutter auf bzw. bildet die Spindelmutter. Insbesondere kann bei dieser Ausgestaltung das erste Stellelement als Gewindestift ausgebildet sein, dessen Längsachse der Verstellrichtung entspricht.

Vorteilhaft kann der Abstreiferträger eine Außenwandung aufweisen, welche einen Innenraum wenigstens überwiegend umschließt, wobei das erste Stellelement überwiegend im Innenraum angeordnet ist. Die Außenwandung kann durch ein oder mehrere Blechformteile gebildet sein. Sie definiert im Wesentlichen die äußere Form des Abstreiferträgers und bildet typischerweise auch eine Anlagefläche für den Abstreifer. Innerhalb der Außenwandung ist ein Innenraum ausgebildet, der Teile der Verstellanordnung aufnehmen kann. In diesem Fall ist das erste Stellelement überwiegend im Innenraum angeordnet. Auch das zweite Stellelement kann wenigstens teilweise oder auch überwiegend im Innenraum angeordnet sein. Die innerhalb des Innenraums angeordneten Teile sind weitgehend vor Verschmutzung oder Beschädigung geschützt, wodurch die Funktionsfähigkeit der Verstellanordnung länger gewährleistet werden kann. Auch können die im Innenraum angeordneten Elemente den Erntegutstrom nicht stören.

Bei der o.g. Ausgestaltung kann das erste Stellelement durch die Außenwandung hindurchgeführt sein und außenseitig kann ein Rückhalteelement angeordnet sein, über welches ein Formschluss in Verstellrichtung zwischen dem ersten Stellelement und dem Abstreiferträger hergestellt ist. Die Außenwandung weist eine Durchgangsbohrung bzw. Durchgangsöffnung auf, durch welche das erste Stellelement hindurchgeführt ist. Außenseitig ist das Rückhalteelement angeordnet, welches entweder einstückig mit dem ersten Stellelement ausgebildet sein kann oder aber als separates Bauteil. Im ersteren Falle könnte das Rückhalteelement bspw. ein Schraubenkopf sein, wobei am Schaft der Schraube das o.g. Außengewinde des ersten Stellelements angeordnet ist. Alternativ ist allerdings auch eine formschlüssige Verbindung zwischen dem ersten Stellelement und dem Rückhalteelement möglich. Bspw. kann das Rückhalteelement als Kronenmutter ausgebildet sein, die über einen Sicherungssplint, der durch eine Durchgangsbohrung im ersten Stellelement geführt ist, gegen Verdrehung am ersten Stellelement gesichert ist. Wenn das Rückhalteelement in Position ist, verhindert es durch den Formschluss ein Hindurchziehen des ersten Stellelements durch die Außenwandung.

Um das Verdrehen des ersten Stellelements zu unterstützen, weist dieses bevorzugt an wenigstens einem Ende ein Schrauben-Mitnahmeprofil auf. Hierbei sind unterschiedlichste Möglichkeiten gegeben, bspw. kann das Mitnahmeprofil als Schlitz, Kreuzschlitz, Innensechsrund, Innen- oder Außensechskant, Innen- oder Außenvierkant oder dergleichen ausgebildet sein. Bei der Montage, Demontage oder Justierung der Verstellanordnung kann das erste Stellelement über ein entsprechendes Werkzeug bedient werden, das ein komplementäres Profil aufweist. Sofern das erste Stellelement überwiegend im Innenraum des Abstreiferträgers angeordnet ist, ist das Schrauben-Mitnahmeprofil bevorzugt außenseitig der Außenwandung angeordnet, so dass es leicht erreichbar ist.

Bevorzugt weist die Verstellanordnung wenigstens ein primäres Arretierelement zur Arretierung des ersten Stellelements gegenüber dem Abstreiferträger auf. Die Arretierung verhindert dabei sowohl eine Verschiebung als auch eine Verdrehung des ersten Stellelements relativ zum Abstreiferträger. Eine solche Arretierung führt (abgesehen von einem möglicherweise vorhandenen Spiel zwischen den beiden Stelleelementen) auch zu einer Arretierung des zweiten Stellelements, was wiederum eine Verschiebung des Abstreifers verhindert. Das Vorhandensein eines solchen primären Arretierelements kann die Handhabung der Abstreifvorrichtung vereinfachen, da im Anschluss sowohl die Einstellung der Position des Abstreifers als auch die Arretierung im gleichen Bereich vorgenommen werden können, nämlich an der Verstellanordnung.

Insbesondere kann wenigstens ein primäres Arretierelement auf das Außengewinde des ersten Stellelements aufgeschraubt sein, wobei das erste Stellelement durch eine Schraubbewegung des primären Arretierelements gegenüber dem ersten Stellelement gegen den Abstreiferträger verspannbar ist. Bspw. kann das primäre Arretierelement als Sechskantmutter ausgebildet sein, die auf das Außengewinde aufgeschraubt wird. Je nach Position des primären Arretierelements kann dieses bspw. in Anlage mit der Außenwandung des Abstreiferträgers kommen. Es kann auch eine Unterlegscheibe bzw. SKM-Scheibe zwischen der Mutter und der Außenwandung zwischengeordnet sein. Bspw. kann wie oben beschrieben ein erstes Ende des ersten Stellelements auf einer Seite nach außen durch die Außenwandung hindurchgeführt sein, wobei außenseitig ein Rückhalteelement angeordnet ist, während ein zweites Ende auf einer gegenüberliegenden Seite durch die Außenwandung nach außen hindurchgeführt ist, wo das primäre Arretierelement aufgeschraubt ist. Im Zusammenspiel mit dem Rückhalteelement kann das primäre Arretierelement, wenn es weiter aufgeschraubt wird, ein Verspannen des primären Stellelements bewirken. D.h., das Rückhalteelements sowie das primäre Arretierelement erzeugen mit der Außenwandung einen Kraftschluss, der eine weitere Verstellung des ersten Stellelements verhindert.

Aus unterschiedlichen Gründen kann es vorteilhaft sein, wenn die Abstreifvorrichtung wenigstens ein von der wenigstens einen Verstellanordnung unabhängiges sekundäres Arretierelement zur Arretierung des Abstreifers gegenüber dem Abstreiferträger aufweist. Bspw. kann bei einer Montage oder Demontage der Verstellanordnung durch das wenigstens eine sekundäre Arretierelement die Position des Abstreifers vorübergehend gesichert werden. Ein weiterer Grund kann sein, dass die Arretierung des Abstreifers verbessert wird bzw. die Belastung eines primären Arretierelements verringert wird, wenn zusätzlich eine Arretierung über wenigstens ein sekundäres Arretierelement gegeben ist. Schließlich wäre es auch möglich, dass das wenigstens eine sekundäre Arretierelement statt eines primären Arretierelements eingesetzt wird, wobei keine direkte Arretierung der Verstellanordnung möglich wäre. Aus Gründen der Stabilität sind normalerweise eine Mehrzahl von sekundären Arretierelementen vorgesehen, die typischerweise quer zur Verstellrichtung beabstandet sind. Insbesondere kann wenigstens ein sekundäres Arretierelement als Schraube ausgebildet sein. Der Abstreifer kann ein Langloch aufweisen, welches sich in Verstellrichtung erstreckt und durch welches die Schraube hindurchgeführt ist. Im Abstreiferträger kann eine Bohrung mit Innengewinde ausgebildet sein, in welche die Schraube eingeschraubt wird, um den Abstreifer zu arretieren. Das Langloch kann sich an eine Nut auf einer vom Abstreiferträger abgewandten Seite des Abstreifers anschließen, wobei die Nut so bemessen ist, dass sie den Kopf der Schraube aufnehmen kann.

Wie bereits oben angedeutet, bestehen unterschiedliche Möglichkeiten der Kraftübertragung vom zweiten Stellelement zum Abstreifer. Gemäß einer bevorzugten Ausgestaltung greift das zweite Stellelement formschlüssig in eine Ausnehmung des Abstreifers ein. Die Ausnehmung ist selbstverständlich auf einer dem Abstreiferträger zugewandten Seite des Abstreifers ausgebildet. Bevorzugt ist sie als Blindausnehmung ausgebildet, so dass das zweite Stellelement von der gegenüberliegenden Seite abgeschirmt ist. Auf diese Weise wird auch verhindert, dass an dieser Stelle Schmutz oder sonstiges Material durch den Abstreifer hindurch und z.B. in den Innenraum des Abstreiferträgers gelangt. Um ein möglichst unmittelbares Ansprechen des Abstreifers auf Verstellbewegungen der Verstellanordnung zu erreichen, ist das zweite Stellelement bevorzugt spielfrei oder mit minimalem Spiel (bspw. weniger als 1 mm) in der Ausnehmung aufgenommen. Das zweite Stellelement könnte in die Ausnehmung eingeschraubt sein, bevorzugt ist es allerdings lediglich eingesteckt, wodurch bei Bedarf eine Montage bzw. Demontage des Abstreifers möglich ist, ohne das zweite Stellelement oder andere Teile der Verstellanordnung zu demontieren.

Um zu verhindern, dass sich das zweite Stellelement bei einer Drehung des ersten Stellelements mitdreht, weist der Abstreiferträger einen Führungsschlitz auf, in welchem das zweite Stellelement in Verstellrichtung geführt ist. Der Führungsschlitz ist normalerweise in der o.g. Außenwandung des Abstreiferträgers ausgebildet. Seine Abmessungen sind an die Abmessungen des zweiten Stellelements angepasst, so dass Letzteres den Führungsschlitz durchgreifen bzw. darin aufgenommen sein kann, wobei normalerweise allenfalls ein geringes Spiel zwischen dem zweiten Stellelement und dem Führungsschlitz gegeben ist. Außenseitig des Führungsschlitzes kann das zweite Stellelement wie oben beschrieben in die Ausnehmung des Abstreifers eingreifen.

Grundsätzlich lassen sich zahlreiche Vorteile der Erfindung mit einer einzigen Verstellanordnung realisieren. Es ist allerdings bevorzugt, dass der Abstreifer mit dem Abstreiferträger durch eine Mehrzahl von quer zur Verstellrichtung beabstandeten Verstellanordnungen verbunden ist. Insbesondere können genau zwei Verstellanordnungen vorgesehen sein, die bspw. an gegenüberliegenden Endbereichen des Abstreifers angeordnet sein können. Durch zwei Verstellanordnungen ist es bspw. möglich, die Positionen von zwei beabstandeten Punkten des Abstreifers (innerhalb gewisser Grenzen) unabhängig voneinander einzustellen. Hierdurch kann bspw. nicht nur ein Abstand des Abstreifers zu der Oberfläche des Förderelements eingestellt werden, sondern es kann auch bspw. dafür gesorgt werden, dass der Abstreifer (bzw. eine benachbart zum Förderelement angeordnete Abstreiferkante desselben) exakt parallel zu dieser Oberfläche ausgerichtet ist. Somit könnten bspw. auch möglicherweise gegebene Verformungen, Dejustierungen oder Fertigungsfehler anderer Bauteile ausgeglichen werden.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Schnittdarstellung einer erfindungsgemäßen Rollenballenpresse;
- Fig. 2: eine perspektivische Darstellung einer Baugruppe der Rollenballenpresse aus Fig. 1;
- Fig. 3: eine perspektivische Detaildarstellung der Baugruppe aus Fig. 2; und
- Fig. 4: eine Schnittdarstellung der Baugruppe aus Fig. 2.

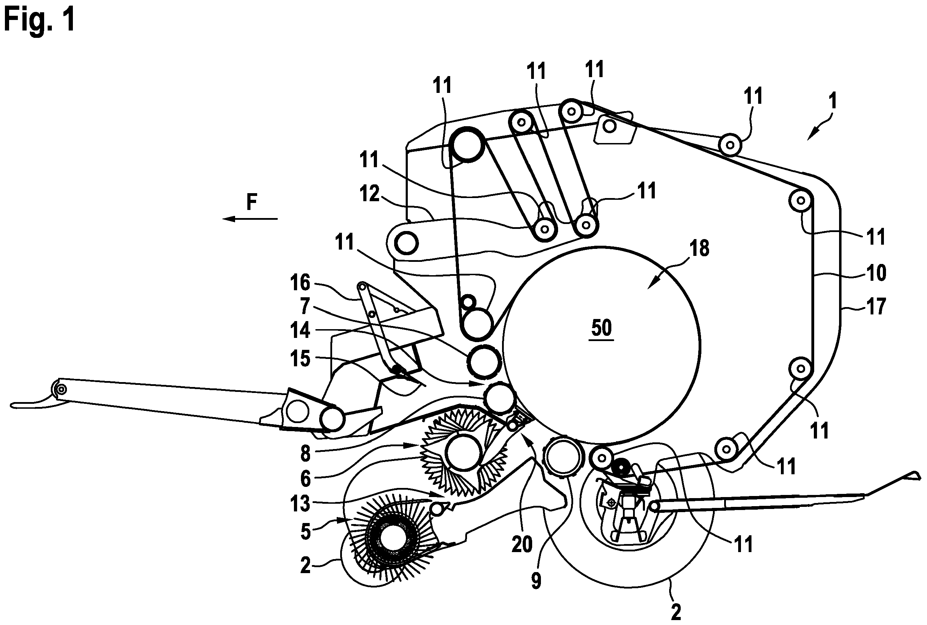

Fig. 1 zeigt eine Erntemaschine, genauer gesagt eine Rollenballenpresse 1, gemäß der vorliegenden Erfindung. Die Rollenballenpresse 1 ist in bekannter Weise dazu vorgesehen, von einer Zugmaschine bzw. einem Traktor (nicht dargestellt) gezogen zu werden. Die Erfindung ist aber nicht auf gezogene oder getragene Erntemaschinen beschränkt, sondern umfasst auch selbstfahrende Erntemaschinen. An einem Rahmen der Rollenballenpresse 1 sind abgesehen von Laufrädern 2, auf welchen die Rollenballenpresse 1 aufsteht, verschiedene Förderelemente 5 - 10 beweglich gelagert. In einer Fahrtrichtung F vorderseitig ist eine Pick-up 5 erkennbar, die im Betrieb (bezogen auf Fig. 1) im Uhrzeigersinn rotiert und dazu dient, Erntegut, genauer gesagt Halmgut wie Stroh, Heu oder Gras, vom Boden aufzunehmen. Von der Pick-up 5 gelangt das Erntegut zu einem Förderrotor 6, der entgegen dem Uhrzeigersinn rotiert. Er weist eine Mehrzahl von Zinken auf, die das Erntegut ergreifen und weiter entgegen der Fahrtrichtung F und leicht aufwärts durch einen Förderkanal 13 transportieren. Anstelle des Förderrotors 6 könnte auch ein Schneidrotor eingesetzt werden, der das Erntegut nicht nur fördert, sondern auch zerkleinert.

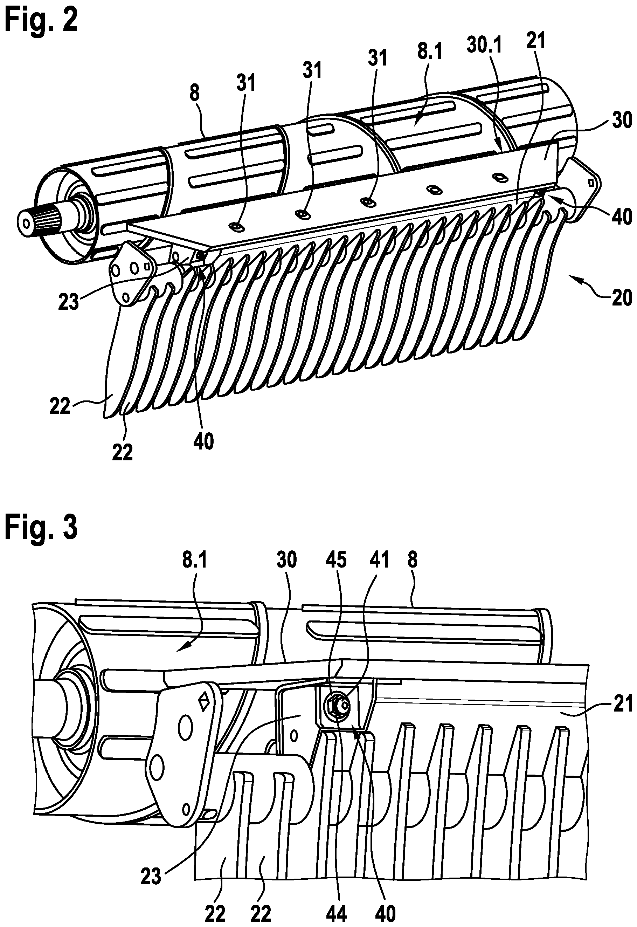

Drei Presswalzen 7, 8, 9 sowie wenigstens ein Pressriemen 10 (ggf. auch mehrere senkrecht zur Zeichenebene nebeneinander angeordnete Pressriemen) definieren eine Presskammer 18 von variabler Größe, in der aus dem Erntegut ein hier schematisch dargestellter Erntegutballen 50 geformt wird. Zwischen einer ersten Presswalze 7 und einer darunter angeordneten zweiten Presswalze 8 ist ein Spalt 14 ausgebildet. Unterhalb der zweiten Presswalze 8 ist eine Abstreifvorrichtung 20 angeordnet, deren Aufbau und Funktion nachfolgend noch mit Bezug auf Fig. 2 bis 4 erläutert wird. Zwischen der Abstreifvorrichtung 20 und einer dritten Presswalze 9 mündet der Förderkanal 13 in die Presskammer 18 ein. Die Presswalzen 7 - 9 rotieren beim Betrieb der Rollenballenpresse 1 im Uhrzeigersinn, ebenso wie eine Mehrzahl von Führungswalzen 11, über die der wenigstens eine Pressriemen 10 geführt ist. Zwei der Führungswalzen 11 sind einem Riemenspanner 12 zugeordnet, der unabhängig von der Größe des Erntegutballens 50 für eine ausreichende Spannung des Pressriemens 10 sorgt.

Die Presswalzen 7 - 9 sowie der Pressriemen 10 bewirken eine Rotation des Erntegutballens 50 entgegen dem Uhrzeigersinn und gleichzeitig ein Verpressen des Ernteguts, welches im Förderkanal 13 bereits vorverdichtet werden kann. Wenn der Erntegutballen 50 eine vorgesehene Maximalgröße erreicht hat, wird er noch innerhalb der Presskammer 18 mit einem hier nicht dargestellten Bindematerial (bspw. einer Folie oder einem Netz) umwickelt, bevor er schließlich durch Öffnen einer Heckklappe 17 der Rollenballenpresse 1 entgegen der Fahrtrichtung F nach hinten ausgeworfen wird. Zunächst wird das Bindematerial durch einen Zuführschnabel 15 erfasst, der mittels einer Führungskulisse 16 geführt wird und das Bindematerial durch den Spalt 14 bis an den Erntegutballen 50 heranführt. Von dort wird das Bindematerial durch die Rotation des Erntegutballens 50 und der zweiten Presswalze 8 zwischen diesen hindurchgezogen, wobei es idealerweise am Erntegutballen 50 anhaftet und dann durch dessen Rotation um ihn herumgewickelt wird. Unter Umständen kann das Bindematerial allerdings an einer Oberfläche 8.1 der zweiten Presswalze 8 anhaften, so dass die Gefahr besteht, dass es um die zweite Presswalze 8 herumgewickelt wird. Dem wird durch die Abstreifvorrichtung 20 entgegengewirkt.

Die Abstreifvorrichtung 20 weist einen Abstreiferträger 21 auf, an dem eine Mehrzahl von Abstreiferfingern 22 angeschweißt sind. Jeweils ein Abstreiferfinger 22 greift dabei zwischen zwei Zinken des Förderrotors 6 ein und wirkt somit dem Anhaften von Erntegut am Förderrotor 6 entgegen. Außerdem ist ein Abstreifer 30, der auch als Abstreiferblech oder Kratzleiste bezeichnet werden kann, mit dem Abstreiferträger 21 verbunden, so dass er mit einer Abstreiferkante 30.1 benachbart zur Oberfläche 8.1 der zweiten Presswalze 8 angeordnet ist. Wenn die zweite Presswalze 8 im Betrieb rotiert, wird ihre Oberfläche 8.1 in dichtem Abstand am Abstreifer 30 vorbeigeführt, wodurch anhaftendes Material von ihr abgestreift wird. Der Abstreiferträger 21 weist eine Außenwandung 21.1 aus Stahlblech auf, die wenigstens überwiegend einen Innenraum 21.2 umgibt.

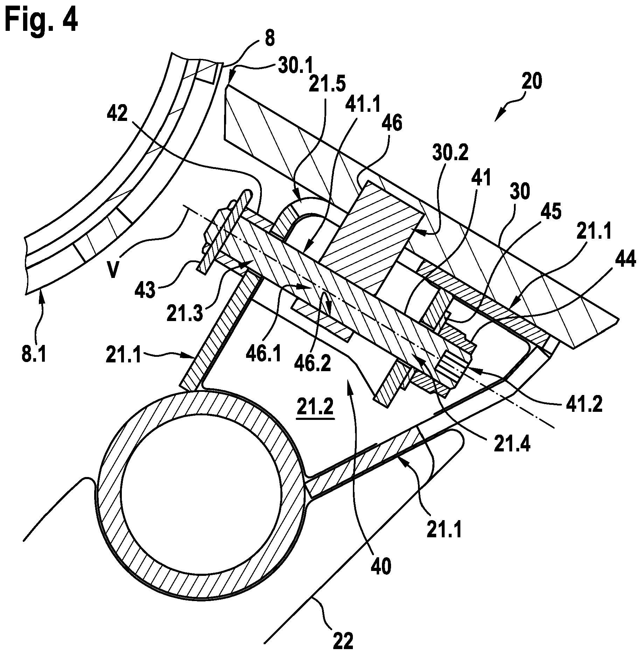

Die optimale Funktion des Abstreifers 30 hängt von der Einstellung seines Abstands zur zweiten Presswalze 8 ab. Hierzu sind an gegenüberliegenden Enden des Abstreiferträgers 30 zwei Verstellanordnungen 40 vorgesehen, die ein sicheres und genaues Justieren des Abstreifers 30 erlauben. Wie in der Schnittdarstellung von Fig. 4 erkennbar ist, weist jede Verstellanordnung 40 einen Gewindestift 41 als ein erstes Stellelement auf. Dieser ist durch zwei glatte Durchgangsbohrungen 21.3, 21.4 in der Außenwandung 21.1 des Abstreiferträgers 21 hindurchgeführt. Entsprechend ist der Gewindestift 41 um eine Verstellrichtung V gegenüber dem Abstreiferträger 21 drehbar. Außerdem greift ein Außengewinde 41.1 des Gewindestifts 41 mit einem Innengewinde 46.2 in einer Durchgangsbohrung 46.1 eines Bolzens 46 ein, der ein zweites Stellelement bildet. Der Gewindestift 41 und der Bolzen 46 wirken somit als Schraubengetriebe zusammen. Dabei ist der Bolzen 46 zum einen in einem Führungsschlitz 21.5 in der Außenwandung 21.1 in Verstellrichtung V geführt und zum anderen in einer Blindausnehmung 30.2 im Abstreifer 30 formschlüssig aufgenommen.

Der Gewindestift 41 ist einerseits außenseitig des Abstreiferträgers 21 durch eine Kronenmutter 42 und einen Splint 43 gesichert; andererseits außenseitig ist eine Sicherungsmutter 44 unter Zwischenordnung einer SKM-Scheibe 45 aufgeschraubt. Die Kronenmutter 42 wirkt hier daher als Rückhaltemittel. Die SKM- Scheibe 45 sowie die Sicherungsmutter 44 werden hier als primäre Arretierelemente genutzt. Wird die Sicherungsmutter 44 festgezogen, ist der Gewindestift 41 gegen den Abstreiferträger 21 verspannt und aufgrund des Kraftschlusses über die SKM-Scheibe 45 gegen Verdrehen gesichert. Durch Lösen der Sicherungsmutter 44 kann der Gewindestift 41 gegenüber dem Abstreiferträger 21 um die Verstellrichtung V gedreht werden, was in dem hier gezeigten Beispiel über einen Innensechskant-Profil 41.2 möglich ist. Die Drehung des Gewindestifts 41 führt dabei zu einer Verschiebung des Bolzens 46 in Verstellrichtung V und somit auch zu einer entsprechenden Verschiebung des Abstreifers 30.

Ein Abheben des Abstreifers 30 vom Abstreiferträger 21 wird durch eine Mehrzahl von Schrauben 31 verhindert, die Langlöcher innerhalb des Abstreifers 30 durchgreifen und in Gewindebohrungen im Abstreiferträger 21 eingeschraubt sind. Die entsprechenden Schrauben 31 können als zusätzliche Sicherung festgezogen werden, wenn die Einstellung des Abstreifers 30 beendet wurde. Die Schrauben 31 werden hier daher als sekundäre Arretierelemente verwendet. Beim erstmaligen Einbau der Verstellanordnung 40 können die Schrauben 31 auch zur zwischenzeitlichen Sicherung des Abstreifers 30 genutzt werden, bis der Gewindestift 41 in den Bolzen 46 eingeschraubt und mittels der Kronenmutter 42 gesichert wurde. Sowohl der Gewindestift 41 als auch der Bolzen 46 sind überwiegend innerhalb des Innenraums 21.2 des Abstreiferträgers 21 angeordnet und somit vor Verschmutzung geschützt. Auch ist umgekehrt eine Beeinträchtigung des Erntegutstroms durch die Verstellanordnung 40 ausgeschlossen. Um die Verstellanordnung 40 nach außen hin abzuschirmen, weist der Abstreiferträger 21 jeweils eine lösbare Schutzhaube 23 auf, die nach erfolgter Justierung des Abstreifers 30 angesetzt und bspw. festgeschraubt werden kann.

Das Schraubengetriebe der einzelnen Verstellanordnung 40 erlaubt eine präzise Einstellung des Abstands zwischen Abstreifer 30 und Oberfläche 8.1, wobei durch die Unabhängigkeit der beiden Verstellanordnungen 40, die an gegenüberliegenden Endbereichen des Abstreiferträgers 21 angeordnet sind, auch die parallele Ausrichtung der Abstreiferkante 30.1 zur Oberfläche 8.1 einstellbar ist, selbst wenn bspw. der Abstreiferträger 21 gegenüber der zweiten Presswalze 8 von einer vorgesehenen Position abweichen sollte.

## Patentansprüche

1. Ballenpresse (1) für landwirtschaftliches Erntegut, aufweisend ein bewegliches Förderelement (8, 9) sowie eine Abstreifvorrichtung (20) mit einem Abstreiferträger (21) sowie einem Abstreifer (30), wobei das Förderelement (8, 9) als eine drehbar gelagerte Walze (8, 9) zum Fördern und Pressen von Erntegut ausgebildet ist, wobei eine Oberfläche (8.1) des Förderelements (8, 9) benachbart zum Abstreifer (30) an diesem vorbeibewegbar ist, um anhaftendes Material von der Oberfläche (8.1) abzustreifen, und wobei eine Position des Abstreifers (30) relativ zum Abstreiferträger (21) einstellbar ist,
wobei der Abstreifer (30) mit dem Abstreiferträger (21) durch wenigstens eine Verstellanordnung (40) verbunden ist,
**dadurch gekennzeichnet dass**,
die Verstellanordnung (40) ein gegenüber dem Abstreiferträger (21) um eine Verstellrichtung (V) drehbares erstes Stellelement (41) aufweist sowie ein mit diesem ein Schraubengetriebe bildendes, gegenüber dem Abstreiferträger (21) in Verstellrichtung (V) verschiebbares zweites Stellelement (46), welches zur Kraftübertragung auf den Abstreifer (30) eingerichtet ist.

2. Ballenpresse (1) nach Anspruch 1, **dadurch gekennzeichnet, dass** das erste Stellelement (41) ein Außengewinde (41.1) aufweist und das zweite Stellelement (46) ein hiermit zusammenwirkendes Innengewinde (46.2) aufweist.

3. Ballenpresse (1) nach einem der vorherigen Ansprüche, **dadurch gekennzeichnet, dass** der Abstreiferträger (21) eine Außenwandung (21.1) aufweist, welche einen Innenraum (21.2) wenigstens überwiegend umschließt, wobei das erste Stellelement (41) überwiegend im Innenraum (21.2) angeordnet ist.

4. Ballenpresse (1) nach Anspruch 3, **dadurch gekennzeichnet, dass** das erste Stellelement (41) durch die Außenwandung (21.1) hindurchgeführt ist und außenseitig ein Rückhalteelement (42) angeordnet ist, über welches ein Formschluss in Verstellrichtung (V) zwischen dem ersten Stellelement (41) und dem Abstreiferträger (21) hergestellt ist.

5. Ballenpresse (1) nach einem der vorherigen Ansprüche, **dadurch gekennzeichnet, dass** das erste Stellelement (41) an wenigstens einem Ende ein Schrauben-Mitnahmeprofil (41.2) aufweist.

6. Ballenpresse (1) nach einem der vorherigen Ansprüche, **dadurch gekennzeichnet, dass** die Verstellanordnung (40) wenigstens ein primäres Arretierelement (44, 45) zur Arretierung des ersten Stellelements (41) gegenüber dem Abstreiferträger (21) aufweist.

7. Ballenpresse (1) nach einem der Ansprüche 2 - 6, **dadurch gekennzeichnet, dass** wenigstens ein primäres Arretierelement (44, 45) auf das Außengewinde (41.1) des ersten Stellelements (41) aufgeschraubt ist, wobei das erste Stellelement (41) durch eine Schraubbewegung des primären Arretierelements (44, 45) gegenüber dem ersten Stellelement (41) gegen den Abstreiferträger (21) verspannbar ist.

8. Ballenpresse (1) nach einem der vorherigen Ansprüche, **dadurch gekennzeichnet, dass** die Abstreifvorrichtung (20) wenigstens ein von der wenigstens einen Verstellanordnung (40) unabhängiges sekundäres Arretierelement (31) zur Arretierung des Abstreifers (30) gegenüber dem Abstreiferträger (21) aufweist.

9. Ballenpresse (1) nach einem der vorherigen Ansprüche, **dadurch gekennzeichnet, dass** das zweite Stellelement (46) formschlüssig in eine Ausnehmung (30.2) des Abstreifers (30) eingreift.

10. Ballenpresse (1) nach einem der vorherigen Ansprüche, **dadurch gekennzeichnet, dass** der Abstreiferträger (21) einen Führungsschlitz (21.5) aufweist, in welchem das zweite Stellelement (46) in Verstellrichtung (V) geführt ist

11. Ballenpresse (1) nach einem der vorherigen Ansprüche, **dadurch gekennzeichnet, dass** der Abstreifer (30) mit dem Abstreiferträger (21) durch eine Mehrzahl von quer zur Verstellrichtung (V) beabstandeten Verstellanordnungen (40) verbunden ist.

## Claims

1. Baler (1) for agricultural harvested crops, comprising a movable conveyor element (8, 9) and a stripping device (20) having a stripper support (21) and a stripper (30), the conveyor element (8, 9) being designed as a rotatably mounted roller (8, 9) for conveying and pressing harvested crops, a surface (8.1) of the conveyor element (8, 9) adjacent to the stripper (30) being able to be moved past the stripper in order to strip adhering material from the surface (8.1), and a position of the stripper (30) relative to the stripper support (21) being adjustable,
the stripper (30) being connected to the stripper support (21) by at least one adjustment arrangement (40),
**characterized in that**
the adjustment arrangement (40) has a first adjustment element (41) which can be rotated relative to the stripper support (21) about an adjustment direction (V), and a second adjustment element (46) which forms a helical gear with the first adjustment element, is displaceable relative to the stripper support (21) in the adjustment direction (V), and is designed to transmit force to the stripper (30).

2. Baler (1) according to claim 1, **characterized in that** the first adjustment element (41) has an external thread (41.1) and the second adjustment element (46) has an internal thread (46.2) interacting therewith.

3. Baler (1) according to either of the preceding claims,
**characterized in that** the stripper support (21) has an outer wall (21.1) which at least predominantly encloses an interior (21.2), the first adjustment element (41) being predominantly arranged in the interior (21.2).

4. Baler (1) according to claim 3, **characterized in that** the first adjustment element (41) is guided through the outer wall (21.1) and a retaining element (42) is arranged on the outside, via which a form-fitting connection in the adjustment direction (V) is produced between the first adjustment element (41) and the stripper support (21).

5. Baler (1) according to any of the preceding claims, **characterized in that** the first adjustment element (41) has a screw drive profile (41.2) at at least one end.

6. Baler (1) according to any of the preceding claims, **characterized in that** the adjustment arrangement (40) has at least one primary locking element (44, 45) for locking the first adjustment element (41) relative to the stripper support (21).

7. Baler (1) according to any of claims 2-6, **characterized in that** at least one primary locking element (44, 45) is screwed onto the external thread (41.1) of the first adjustment element (41), the first rotary element (41) being able to be clamped against the stripper support (21) by a screwing movement of the primary locking element (44, 45) relative to the first adjustment element (41).

8. Baler (1) according to any of the preceding claims, **characterized in that** the stripping device (20) has at least one secondary locking element (31), independent of the at least one adjustment arrangement (40), for locking the stripper (30) relative to the stripper support (21).

9. Baler (1) according to any of the preceding claims, **characterized in that** the second adjustment element (46) engages in a form-fitting manner in a recess (30.2) of the stripper (30).

10. Baler (1) according to any of the preceding claims, **characterized in that** the stripper support (21) has a guide slot (21.5) in which the second adjustment element (46) is guided in the adjustment direction (V).

11. Baler (1) according to any of the preceding claims, **characterized in that** the stripper (30) is connected to the stripper support (21) by a plurality of adjustment arrangements (40) spaced apart transversely to the adjustment direction (V).

## Revendications

1. Presse à balles (1) pour les produits agricoles de récolte comprenant un élément de transfert (8, 9) mobile ainsi qu'un dispositif de racleur (20) avec un support de racleur (21) et un racleur (30),
- l'élément de transfert (8, 9) étant sous la forme d'un cylindre (8, 9) monté à rotation pour transférer et presser les produits de récolte,
- râcler la surface (8.1) de l'élément de transfert (8, 9) qui passe devant, près du racleur (30) pour racler la matière accrochée à la surface (8.1), et
- la position du racleur (30) étant réglable par rapport au support de racleur (21),
- le racleur (30) étant relié par au moins un dispositif de réglage (40) au support de racleur (21),
presse à balles **caractérisée en ce que**
le dispositif de réglage (40) comporte un premier élément de réglage (41) tournant par rapport au support de racleur (21) autour d'une direction de réglage (V) ainsi qu'un second élément de réglage (46) formant avec celui-ci une transmission à vis, coulissant par rapport au racleur (21) dans la direction de réglage (V), et qui est conçue pour transmettre la force au racleur (30).

2. Presse à balles (1) selon la revendication 1,
**caractérisée en ce que**
le premier élément de réglage (41) a un filetage extérieur (41.1) et le second élément de réglage (46) a un filetage intérieur (46.2) coopérant avec celui-ci.

3. Presse à balles (1) selon l'une des revendications précédentes,
**caractérisée en ce que**
le support de racleur (21) a une paroi extérieure (21.1) qui entoure au moins pratiquement un volume intérieur (21.2), le premier élément de réglage (41) étant principalement dans le volume intérieur (21.2).

4. Presse à balles (1) selon la revendication 3,
**caractérisée en ce que**
le premier élément de réglage (41) traverse la paroi extérieure (21.1) et le côté extérieur a un élément de retenue (42) qui réalise une liaison par la forme dans la direction de réglage (V) entre le premier élément de réglage (41) et le support de racleur (21).

5. Presse à balles (1) selon l'une des revendications précédentes,
**caractérisée en ce que**
au moins une extrémité du premier élément de réglage (41) a un profil de vis d'entraînement (41.2).

6. Presse à balles (1) selon l'une des revendications précédentes,
**caractérisée en ce que**
le dispositif de réglage (40) a au moins un élément de blocage primaire (44, 45) pour bloquer le premier élément de réglage (41) par rapport au support de racleur (21).

7. Presse à balles (1) selon l'une des revendications 2-6,
**caractérisée en ce que**
au moins cet élément de blocage primaire (44, 45) est vissé sur le filetage extérieur (41.1) du premier élément de réglage (41),
- le premier élément de réglage (41) étant serré par un déplacement de la vis de l'élément de blocage primaire (44, 45) par rapport au premier élément de réglage (41) contre le support de racleur (21).

8. Presse à balles (1) selon l'une des revendications précédentes,
**caractérisée en ce que**
le dispositif de racleur (20) a au moins un élément de blocage secondaire (31) indépendant de ce dispositif de réglage (40) pour bloquer le racleur (30) par rapport au support de racleur (21).

9. Presse à balles (1) selon l'une des revendications précédentes,
**caractérisée en ce que**
le second élément de réglage (46) vient prendre par une liaison par la forme dans un évidement (30.2) du racleur (30).

10. Presse à balles (1) selon l'une des revendications précédentes,
**caractérisée en ce que**
le support de racleur (21) a une fente de guidage (21.5) dans laquelle le second élément de réglage (46) est guidé dans la direction de réglage (V).

11. Presse à balles (1) selon l'une des revendications précédentes,
**caractérisée en ce que**
le racleur (30) est relié au support de racleur (21) par plusieurs dispositifs de réglage (40), écartés les uns des autres transversalement à la direction de réglage (V).
